# EUROPÄISCHE PATENTSCHRIFT

(11) **EP 3 406 899 B1**
(45) Veröffentlichungstag und Bekanntmachung des Hinweises auf die Patenterteilung: **30.12.2020**
(21) Anmeldenummer: 18170370.3
(22) Anmeldetag: 02.05.2018
(51) Int. Cl.: F03D 80/80, F03D 13/10

(54) **VERFAHREN ZUM VERKABELN EINER WINDENERGIEANLAGE, VERKABELUNGSSYSTEM FÜR EINE WINDENERGIEANLAGE SOWIE WINDENERGIEANLAGE**
WIND TURBINE, METHOD FOR WIRING A WIND TURBINE AND WIRING SYSTEM FOR A WIND TURBINE
PROCÉDÉ DE CÂBLAGE D'UNE ÉOLIENNE, SYSTÈME DE CÂBLAGE POUR UNE ÉOLIENNE AINSI QU'UNE ÉOLIENNE

(30) Priorität: 22.05.2017 DE 102017004876
(43) Veröffentlichungstag der Anmeldung: 28.11.2018
(73) Patentinhaber: Senvion GmbH, 22297 Hamburg (DE)
(72) Erfinder: FREIDLING, Florian, 24568 Kaltenkirchen (DE); SCHÖTENSACK, Sven, 29308 Winsen/Aller (DE); LÜTJEN, Jan, 25585 Lütjenwestedt (DE)
(74) Vertreter: Hahner, Ralph

(56) Entgegenhaltungen:
- WO-A1-2010/108538
- CN-U- 205 944 959
- DE-A1- 10 305 689
- US-A1- 2006 199 411

## Beschreibung

Die Erfindung betrifft ein Verfahren zum Verkabeln einer Windenergieanlage sowie ein Verkabelungssystem für eine Windenergieanlage, welche nach ihrer Errichtung eine auf einem Turm um eine vertikale Azimutachse rotierbare Gondel mit einem Rotor und einen vom Rotor angetriebenen Generator sowie ein Verkabelungssystem zur Leitung von dem Generator erzeugtem Strom aus der Gondel in den Fuß des Turms der Windenergieanlage aufweist, wobei das Verkabelungssystem mittels eines im Turm unterhalb der Gondel angeordneten oder anzuordnenden verdrillbaren Kabel-Loops mit einer Mehrzahl von Kabeln eine mehrfache Umdrehung der Gondel um die Azimutachse zulässt. Die Erfindung betrifft ferner eine entsprechende Windenergieanlage.

Die Errichtung von Windenergieanlagen, die eine Gondel mit einem Rotor mit horizontaler Rotorachse, gegebenenfalls einem Triebstrang, und mit einem Generator aufweisen, die um eine vertikale (azimutale) Achse drehbar auf einem Turm angeordnet ist, erfordert die Herstellung einer Kabelverbindung zwischen dem Generator in der Gondel und Stromkabeln oder einem Stromschienensystem im Turm, um die erzeugte elektrische Leistung aus der Windenergieanlage abtransportieren zu können. Eine solche Kabelverbindung muss die azimutale Drehung der Gondel aushalten können. Es wird daher in der Regel ein Kabel-Loop im obersten Turmsegment unterhalb der Gondel verwirklicht, in welchem die Kabel so geführt sind, dass die gesamte Gondel sich aus ihrer Normlage mit unverdrilltem Kabel-Loop üblicherweise bis zu dreimal mit dem bzw. gegen den Uhrzeigersinn um die vertikale Achse drehen kann, ohne dass die Kabel dabei Schaden nehmen. Dabei verdrillt sich das Kabelbündel im Kabel-Loop. Hierzu ist das Kabel-Loop-System häufig so ausgebildet, dass die Kabel im Kabel-Loop kreisförmig um die vertikale Turmdrehachse angeordnet sind. Während der Azimutdrehung der Gondel führt die Vertretung des Kabel-Loops dazu, dass sich das Kabel-Loop einschnürt und verkürzt.

Die häufig dreißig oder mehr Leitungskabel sind üblicherweise in erforderlicher Länge einschließlich der Länge des Kabel-Loops vorkonfektioniert und werksseitig in der Gondel angeordnet und mit dem Generator verbunden worden. Die Vervollständigung der Verkabelung erfolgt nach dem Aufsetzen der Gondel auf den zuvor errichteten Turm. Dazu werden die auf dem Maschinenträger und in den Gängen der Gondel aufgerollten Leitungskabel abgerollt und einzeln aus der Gondel in den Turm abgelassen. Bevor sie mit dem Leitungsschienensystem oder entsprechenden Kabeln im Turm verbunden werden, müssen die zuvor zusammengerollten Kabel zunächst in den Turm herabgelassen werden, um sich ein oder mehrere Tage lang im Turm glattzuhängen. Dieser Verfahrensschritt kostet wertvolle Montagezeit. Da die aufgerollten Kabel in der Gondel viel Platz wegnehmen, geht die Arbeit in der Gondel aus Platzmangel ebenfalls nur langsam vonstatten. Anstelle von vorkonfektionierten Kabeln können auch Kabel mit ausreichender Überlänge verwendet werden, die vor Ort auf die passende Länge konfektioniert werden. Ein Beispiel aus dem Stand der Technik wird in WO2010/108538A1 offenbart.

Demgegenüber liegt der vorliegenden Erfindung die Aufgabe zugrunde, die Verkabelung einer Windenergieanlage bei gleichbleibender Verbindungsqualität zu beschleunigen.

Diese Aufgabe wird durch ein Verfahren zum Verkabeln einer Windenergieanlage gelöst, welche nach ihrer Errichtung eine auf einem Turm um eine vertikale Azimutachse rotierbare Gondel mit einem Rotor und einen vom Rotor angetriebenen Generator sowie ein Verkabelungssystem zur Leitung von von dem Generator erzeugtem Strom aus der Gondel in den Fuß des Turms der Windenergieanlage aufweist, wobei das Verkabelungssystem mittels eines im Turm unterhalb der Gondel angeordneten oder anzuordnenden verdrillbaren Kabel-Loops mit einer Mehrzahl von Kabeln eine mehrfache Umdrehung der Gondel um die Azimutachse zulässt, welches dadurch weitergebildet ist, dass vor dem Errichten der Windenergieanlage ein gondelseitiges Verkabelungsteilsystem in der Gondel eingebaut wird und ein turmseitiges Verkabelungsteilsystem, welches das Kabel-Loop umfasst, im Turm oder in einem obersten Turmsegment eingebaut wird, wobei beim Errichten der Windenergieanlage die Gondel mit dem gondelseitigen Verkabelungsteilsystem auf den Turm oder das oberste Turmsegment mit dem turmseitigen Verkabelungsteilsystem aufgesetzt wird und nach dem Aufsetzen das gondelseitige Verkabelungsteilsystem mit dem turmseitigen Verkabelungsteilsystem verbunden wird.

Die Erfindung beruht auf dem Grundgedanken, dass das Stromleitungssystem in zwei vorinstallierte Teilsysteme aufgeteilt wird und diese erst vor Ort nach dem Aufsetzen der Gondel auf den Turm miteinander zum Gesamtsystem verbunden werden. Dabei wird zwar in Kauf genommen, dass eine weitere Verbindungsstelle in den Kabeln bzw. dem Verkabelungssystem auftritt. Gerade bei großtechnischen Anlagen wie Windenergieanlagen war eine solche Trennung nicht erwünscht gewesen, da die entsprechenden Anschlussstellen über die gesamte Betriebsdauer einer Windenergieanlage hohen Belastungen ausgesetzt ist. Diese ist jedoch so robust und standardisiert ausführbar, dass sie für die Dauer des Betriebs der Windenergieanlage störungsfrei betreibbar ist und die Vorteile dieser Bauweise die Nachteile überwiegen.

Somit können die Kabel des Kabel-Loops ebenfalls bereits werksseitig im Turm bzw. dessen obersten Turmsegment vorinstalliert werden. Die Installation bereits im Werk garantiert auch, dass die Verbindung der Verkabelungsteilsysteme im Werk mit einerseits dem Generator und andererseits dem weiteren Stromschienensystem oder anderen Kabeln im Turm mit besonders hoher Qualität und Dauerhaftigkeit erfolgt. Damit wird der Nachteil einer Verbindung der beiden Verkabelungsteilsysteme nach dem Aufsetzen der Gondel auf den Turm wenigstens teilweise kompensiert.

Jegliche Konfektionierung wird hierbei auf die Vormontage verlagert. Wertvolle Montagezeit, die ansonsten auf die Konfektionierung der Kabel im Turm unterhalb der bereits aufgesetzten Gondel entfallen würde, wird hierdurch eingespart. Zusätzlich entfällt der Schritt des Glatthängens der langen Kabel im Turm. Da die Kabel außerdem nur noch mit ihrer für die Gondel passenden Länge in der Gondel vorinstalliert sind, entfallen auch die voluminösen Kabelrollen, die bislang in solchen Fällen viel Raum in der Gondel eingenommen haben. Da Montagearbeiter somit von Anfang an ausreichenden Bewegungsraum in der Gondel haben, können die Arbeiten in der Gondel während der Montage auch schneller als bisher vonstattengehen.

Während das turmseitige Verkabelungsteilsystem aus Kabeln besteht, welche das Kabel-Loop umfassen, kann das gondelseitige Verkabelungsteilsystem Kabel umfassen und oder ein Stromschienensystem. Auch ein entsprechendes Stromschienensystem wird werksseitig vorinstalliert und beispielsweise mittels kurzer Anschlusskabel an den Generator in der Gondel angeschlossen. Es erfolgt dann ein Übergang mit einem entsprechenden Anschluss der turmseitigen Kabel an die gondelseitigen Kabel und oder Stromschienen des gondelseitigen Stromschienensystems.

In einer vorteilhaften Alternative werden zur Verbindung der Verkabelungsteilsysteme miteinander Kabel des Kabel-Loops an Anschlussschienen in einem Anschlusskasten des gondelseitigen Verkabelungsteilsystems angeschlossen. Ein solcher Anschlusskasten bietet eine standardisierte und wenig Platz einnehmende Übergabestelle zwischen den beiden Verkabelungsteilsystemen und wird vorteilhafterweise als Teil des gondelseitigen Verkabelungsteilsystems werksseitig vorinstalliert und mit den gondelseitigen Kabeln und/oder dem gondelseitigen Stromschienensystem verbunden. Alternativ kann der Anschlusskasten als Teil des turmseitigen Verkabelungssystems vorinstalliert werden. In dem Fall kann nach dem Aufsetzen der Gondel das gondelseitige Verkabelungsteilsystems an den Anschlusskasten angeschlossen werden. Sofern der Anschlusskasten für den Transport und die Errichtung lediglich temporär im Turm fixiert wurde, kann vor dem Anschließen des Anschlusskastens dieser an vorgesehener Stelle installiert werden.

Erfindungsgemäß werden zur Verbindung der Verkabelungsteilsysteme miteinander Kabel des Kabel-Loops mittels galvanischer Verbindungsmittel an Kabel des gondelseitigen Verkabelungsteilsystems galvanisch angeschlossen. Diese Alternative bietet sich besonders für Verkabelungssysteme an, die auf Leitungskabeln basieren und keine Stromschienensysteme umfassen. Auf diese Weise werden direkte galvanische Verbindungen zwischen den gondelseitigen Kabeln und den turmseitigen Kabeln hergestellt. Die galvanischen Verbindungen werden erfindungsgemäß mit Muffen versehen, sodass diese Verbindungen über die Betriebsdauer der Windenergieanlage eine sichere leitende Verbindung herstellen.

Die der Erfindung zugrunde liegende Aufgabe wird ebenfalls gelöst durch ein Verkabelungssystem für eine Windenergieanlage, welche nach ihrer Errichtung eine auf einem Turm um eine vertikale Azimutachse rotierbare Gondel mit einem Rotor und einen vom Rotor angetriebenen Generator aufweist, wobei das Verkabelungssystem zur Leitung von von dem Generator erzeugtem Strom aus der Gondel in den Fuß des Turms der Windenergieanlage ausgebildet ist und mittels eines im Turm unterhalb der Gondel angeordneten oder anzuordnenden verdrillbaren Kabel-Loops mit einer Mehrzahl von Kabeln eine mehrfache Umdrehung der Gondel um die Azimutachse zulässt, das dadurch weitergebildet ist, dass das Verkabelungssystem ein in der Gondel vorinstalliertes gondelseitiges Verkabelungsteilsystem und ein im Turm oder in einem obersten Turmsegment vorinstalliertes turmseitiges Verkabelungsteilsystem umfasst, welches das Kabel-Loop umfasst, wobei das gondelseitige Verkabelungsteilsystem und das turmseitige Verkabelungsteilsystem nach einem Aufsetzen der Gondel auf den Turm zu dem Verkabelungssystem verbindbar oder verbunden sind.

Das Verkabelungssystem verwirklicht die gleichen Vorteile, Eigenschaften und Merkmale wie das zuvor beschriebene erfindungsgemäße Verfahren. Das Verkabelungssystem erlaubt es, die Verkabelungsteilsysteme im Turm bzw. in der Gondel werksseitig vorzuinstallieren, so dass nach dem Aufsetzen der Gondel auf den Turm die Arbeit zum Herstellen der vollständigen Verbindung wesentlich effizienter und schneller ausgeführt werden kann als nach dem Stand der Technik, unabhängig davon, ob in der Gondel ein Stromschienensystem oder Stromleitungskabel oder eine Kombination daraus installiert sind. Das Verkabelungssystem ist dabei ebenso dauerhaft und belastungsfest ausführbar wie nach dem Stand der Technik, in dem durchgängige Kabel vom Generator bis zum Ende des Kabel-Loops verwendet werden.

In Ausführungsformen umfasst das gondelseitige Verkabelungsteilsystem Leitungsschienen und/oder Leitungskabel für eine oder mehrere Phasen sowie Schutzleiter.

Vorteilhafterweise weist das gondelseitige Verkabelungsteilsystem einen Anschlusskasten mit wenigstens drei Anschlussschienen auf, welche Anschlussstellen zum Anschluss der Kabel des Kabel-Loops aufweisen und mit den Leitungsschienen und/oder Leitungskabeln des gondelseitigen Verkabelungsteilsystems verbunden sind, wobei insbesondere das turmseitige Verkabelungsteilsystem zusätzlich einen unteren Anschlusskasten mit wenigstens drei Anschlussschienen zum Anschluss von unteren Enden der Kabel des Kabel-Loops aufweist. Ein solcher Anschlusskasten bietet eine standardisierte Schnittstelle mit Anschlussschienen zum Anschluss von turmseitigen Kabeln des Kabel-Loops und ist entweder Teil eines gondelseitigen Leitungsschienensystems oder mit einem entsprechenden gondelseitigen Leitungsschienensystem oder gondelseitigen Kabeln verbunden. Diese Verbindung ist bereits werksseitig vollzogen und daher besonders qualitativ hochwertig. Das Gleiche gilt für einen gegebenenfalls im Turm oder im obersten Turmsegment werkseitig vorinstallierten und mit den Kabeln des Kabel-Loops verbundenen unteren Anschlusskasten.

Wenn der Anschlusskasten und/oder der untere Anschlusskasten eine zylindrische Form aufweist, wobei die Anschlussschienen als konzentrische kreisförmige Anschlussschienen ausgebildet sind, ist eine besonders platzsparende Konfiguration eines Anschlusskastens realisiert. Die konzentrischen kreisförmigen Anschlussschienen bieten den weiteren Vorteil, dass die nach unten hängenden noch anzuschließenden oder angeschlossenen turmseitigen Kabel des Kabel-Loops konzentrisch um die azimutale Achse des Turms angeordnet sind und daher in idealer Weise ein Verdrillen bei Azimutdrehung der Gondel ermöglichen. Das Gleiche gilt auch für den gegebenenfalls vorgesehenen unteren Anschlusskasten.

Die Installation und Herstellung der Verbindung zwischen den beiden Verkabelungsteilsystemen erfolgt besonders einfach und schnell, wenn die Anschlussschienen im Anschlusskasten und/oder im unteren Anschlusskasten in vertikaler Richtung gestaffelt angeordnet sind. Die vertikale Staffelung erlaubt es, die Kabel für die einzelnen Phasen jeweils an die entsprechende Anschlussschiene im oberen und/oder unteren Anschlusskasten anzuschließen, ohne dass die anderen Anschlussschienen im Weg sind.

Vorteilhafterweise weist der Anschlusskasten in seinem Zentrum eine Durchführung für Kabel, insbesondere Steuerkabel und/oder Versorgungskabel, und/oder für Schläuche auf. Eine solche Durchführung, die auch durch ein Schutzrohr geschützt sein kann, erlaubt es, Steuerkabel, Versorgungskabel und gegebenenfalls andere Kabel oder Leitungen zentral durchzuführen, sodass vorhandener Platz besonders effektiv ausgenutzt wird. Das Kabel-Loop ist dabei so zu dimensionieren, dass auch bei maximaler Verdrillung des Kabel-Loops die zentral durchgeführten Kabel und Leitungen nicht eingeschnürt werden. Diese Durchführung kann auch bereits im unteren Anschlusskasten beginnen, der ebenfalls zentral von der Durchführung durchsetzt sein kann.

Erfindungsgemäß st vorgesehen, dass die Kabel des Kabel-Loops an ihren turmseitigen Enden galvanische Verbindungsmittel, insbesondere Klemmen, Buchsen oder Stecker, zur Herstellung galvanischer Verbindungen mit passenden Verbindungsmitteln des gondelseitigen Verkabelungsteilsystems aufweisen. Erfindungsgemäß werden die galvanischen Verbindungen mittels Muffen gesichert sind. Solche Muffen erlauben es, die galvanische Verbindung sowohl elektrisch als auch mechanisch abzuschirmen und zu stabilisieren.

In einer Weiterbildung ist vorgesehen, dass wenigstens eine Zugentlastung und/oder Drehmomentstütze an einem oberen Ende des Kabel-Loops und/oder wenigstens eine Zugentlastung und/oder Drehmomentstütze an einem unteren Ende des Kabel-Loops umfasst ist oder sind. Solche Zugentlastungen und Drehmomentstützung haben den vorteilhaften Effekt, dass die Verbindungsstellen zwischen den beiden Verkabelungsteilsystemen entlastet werden und somit deren Lebensdauer weiter erhöht wird.

Schließlich wird die der Erfindung zugrunde liegende Aufgabe auch durch eine Windenergieanlage mit einem zuvor beschriebenen erfindungsgemäßen Verkabelungssystem gelöst. Die entsprechende Windenergieanlage weist die gleichen Eigenschaften, Vorteile und Merkmale auf wie das zuvor beschriebene erfindungsgemäße Verkabelungssystem und das zuvor beschriebene erfindungsgemäße Verfahren.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Teildarstellung einer erfindungsgemäßen Windenergieanlage mit einer ersten Ausführungsform eines erfindungsgemäßen Verkabelungssystems,
- Fig. 2: eine weitere schematische Teildarstellung einer erfindungsgemäßen Windenergieanlage,
- Fig. 3: eine schematische Darstellung eines Teils eines erfindungsgemäßen gondelseitigen Verkabelungsteilsystems,
- Fig. 4: eine schematische Darstellung eines Details aus Fig. 3,
- Fig. 5: eine schematische perspektivische Darstellung eines Details aus Fig. 3 und 4,
- Fig. 6a) - 6d): schematische perspektivische und Schnittdarstellungen eines Anschlusskastens eines erfindungsgemäßen Verkabelungssystems,
- Fig. 7: eine schematische perspektivische Darstellung einer zweiten Ausführungsform eines erfindungsgemäßen Verkabelungssystems,
- Fig. 8: eine perspektivische Darstellung eines Details aus Fig. 7,
- Fig. 9: eine weitere perspektivische Darstellung eines Details aus Fig. 7 und Fig. 8 sowie
- Fig. 10a)-c): schematische Darstellungen erfindungsgemäß einsetzbarer Verbindungsmittel.

In den Zeichnungen sind jeweils gleiche oder gleichartige Elemente und/oder Teile mit denselben Bezugsziffern versehen, so dass von einer erneuten Vorstellung jeweils abgesehen wird.

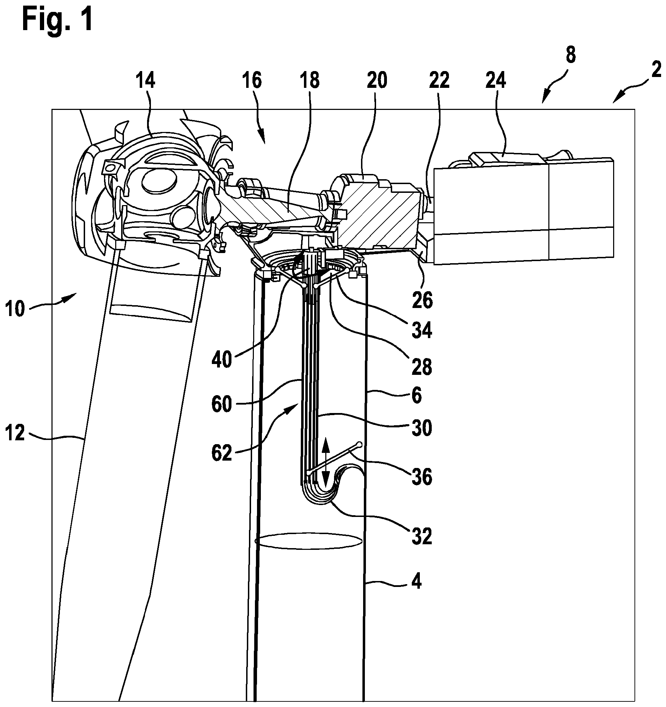

Fig. 1 zeigt eine schematische Teildarstellung einer erfindungsgemäßen Windenergieanlage 2 mit einer ersten Ausführungsform mit Teilen eines erfindungsgemäßen Verkabelungssystems. Die Windenergieanlage 2 umfasst eine teilweise dargestellte Gondel 8, die auf einem vertikalen Turm 4 um eine vertikale Achse drehbar angeordnet ist. Die Gondel 8 trägt einen Rotor 10, von dem ein Rotorblatt 12 und die Rotornabe 14 in einer aufgeschnittenen Darstellung dargestellt sind. Die Rotornabe 14 überträgt ihre Drehung um die im Wesentlichen horizontale Rotorachse über eine langsame Welle 18 eines Triebstrangs 16 an ein Getriebe 20, welches über eine schnelle Welle 22 einen Generator 24 im hinteren Teil der Gondel antreibt, um Strom zu erzeugen. Der Triebstrang 16 und der Generator 24 werden auf einem Maschinenträger 26 getragen. Ein solcher Maschinenträger 26 kann einstückig oder geteilt sein.

Im Turm 4, dessen oberstes Turmsegment 6 ebenfalls dargestellt ist, ist im Zentrum des Turms 4 ein Kabel-Loop 30 angeordnet, welches turmseitige Kabel 60 des turmseitigen Verkabelungsteilsystems 62 enthält, die konzentrisch zur Turmachse angeordnet sind und sich bei einer azimutalen Drehung der Gondel 8 verdrillen. Dabei schnürt sich das Kabelpaket mit den Kabeln 60 ein und verkürzt sich. Das Kabel-Loop 30 ermöglicht so eine dreifache Umdrehung der Gondel 8 in jede Richtung, bevor die Drehung der Gondel 8 gestoppt werden muss. Die Kabel 60 des Kabel-Loops 30 münden in dem Ausführungsbeispiel der Figur 1 oben in einen Anschlusskasten 40, der in den folgenden Figuren näher beschrieben werden wird, sowie am unteren Ende in einen Übergang 32, in dem die Kabel 60 zusammengefasst und in ein weiteres an der Turminnenwand befestigtes Leitungssystem (nicht dargestellt) angeschlossen sind.

Der Anschlusskasten 40 stellt den Übergang vom gondelseitigen Verkabelungsteilsystem zum turmseitigen Verkabelungsteilsystem 62 dar und kann Teil des gondelseitigen Verkabelungsteilsystems sein.

Ebenfalls in Figur 1 sind im Bereich des Anschlusskastens 40 eine zweiteilige Drehmomentstütze 34 und im Bereich des Übergangs 32 eine Zugentlastung 36 dargestellt. Diese dienen dazu, den Anschlusskasten und die Kabel 60 des Kabel-Loops 62 sowie das Übergangsstück am Übergang 32 bei einer Verdrillung der Kabel 60 des Kabel-Loops 62 zu entlasten und davor zu schützen, dass die Verbindungen der Kabel 60 mit den entsprechenden Anschlüssen im Anschlusskasten 40 sowie dem Übergang 32 versagen.

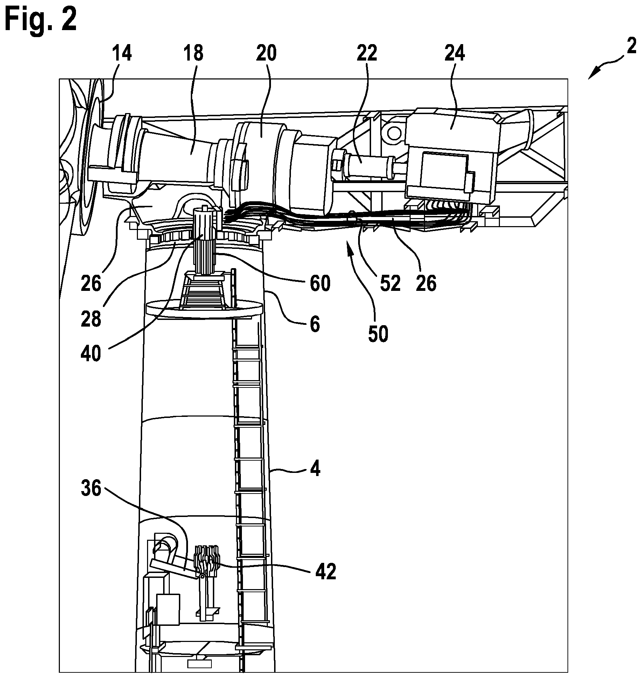

In Fig. 2 ist eine weitere schematische Teildarstellung einer erfindungsgemäßen Windenergieanlage gezeigt, bei dem die Kabel 52 des gondelseitigen Verkabelungsteilsystems 50 zu sehen sind, die im Bereich der Azimutöffnung 28 zum Turm 4 mit dem Anschlusskasten 40 verbunden sind. Der Übersichtlichkeit halber sind die Kabel 60 des Kabel-Loops 30 in dieser Darstellung nicht gezeigt. Im unteren Bereich der Figur 2 ist ein unterer Anschlusskasten 42 gezeigt, der im Wesentlichen spiegelbildlich zum Anschlusskasten 40 angeordnet ist und mit den Anschlüssen nach oben weist, sodass die unteren Enden der nicht dargestellten Kabel 60 mit diesen Anschlüssen des unteren Anschlusskastens 42 verbunden werden können. Der untere Anschlusskasten 42 ist an Hebeln angeordnet, die eine Zugentlastung 36 und Drehmomentstütze 34 darstellen und verhindern, dass der Anschlusskasten 42 sich an dieser Stelle noch drehen kann, wenn die Kabel 60 des Kabel-Loops 30 sich verdrillen.

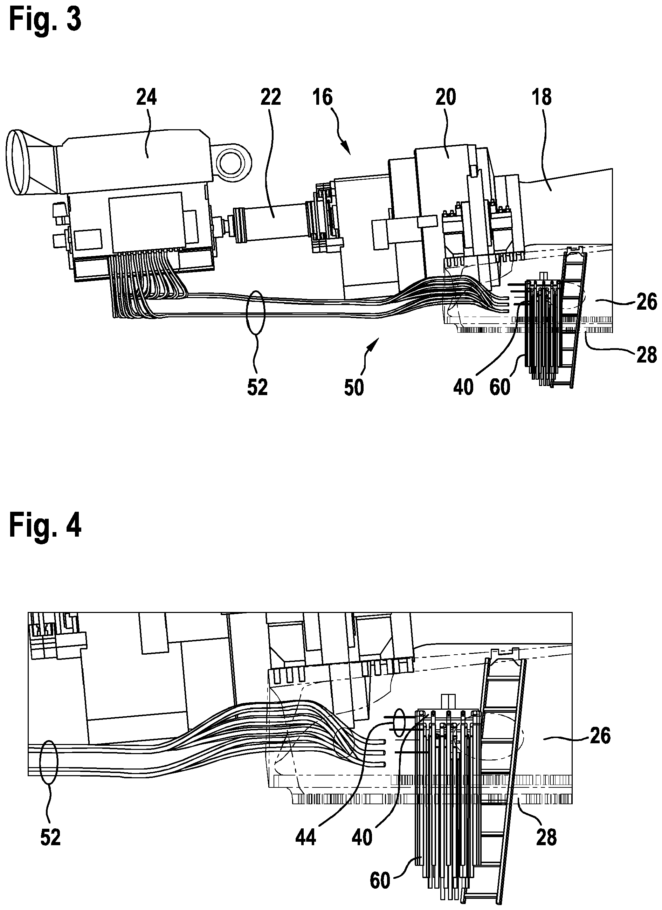

Fig. 3 zeigt eine schematische Darstellung eines Teils eines erfindungsgemäßen gondelseitigen Verkabelungsteilsystems 50, welches Kabel 52 umfasst, die am Generator 24 angeschlossen sind und unterhalb des Triebstrangs 16 zur Azimutöffnung 28 im Maschinenträger 26 geführt sind. Diese Verkabelung und Verbindung mit dem Generator 24 in der Gondel 8 ist bereits werksseitig erfolgt. Die Kabel 52 münden am Anschlusskasten 40, der eine zylindrische Form aufweist, und an dessen unterem Ende die turmseitigen Kabel 60 angeschlossen sind.

Dies ist in Fig. 4 schematisch im Detail dargestellt. Zum Anschluss der Kabel 52 verfügt der Anschlusskasten 40 über Anschlussfahnen 44. Die Anschlussfahnen 44 sind Teil von Anschlussschienen 46a bis 46d für drei Phasen und einen Masseleiter bzw. Schutzleiter. Die konkrete Verbindung der Kabel 52 mit den Anschlussfahnen 44 ist hier nicht dargestellt und erfolgt auf üblichem Wege galvanisch.

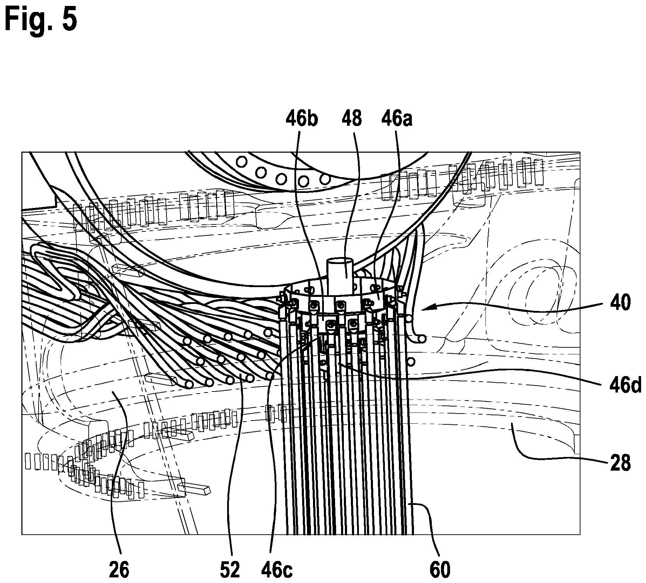

Fig. 5 zeigt eine schematische perspektivische Darstellung eines Details aus Fig. 3 und 4, wobei der zylindrische Anschlusskasten 40 perspektivisch vor den aus dem heckseitigen Teil der Gondel 8 kommenden Kabeln 52 dargestellt ist, welche in Figur 5 aus Gründen der Übersichtlichkeit abgeschnitten dargestellt sind. Gut zu erkennen sind die vertikal gestaffelt angeordneten konzentrischen Anschlussschienen 46a bis 46d des Anschlusskastens 40.

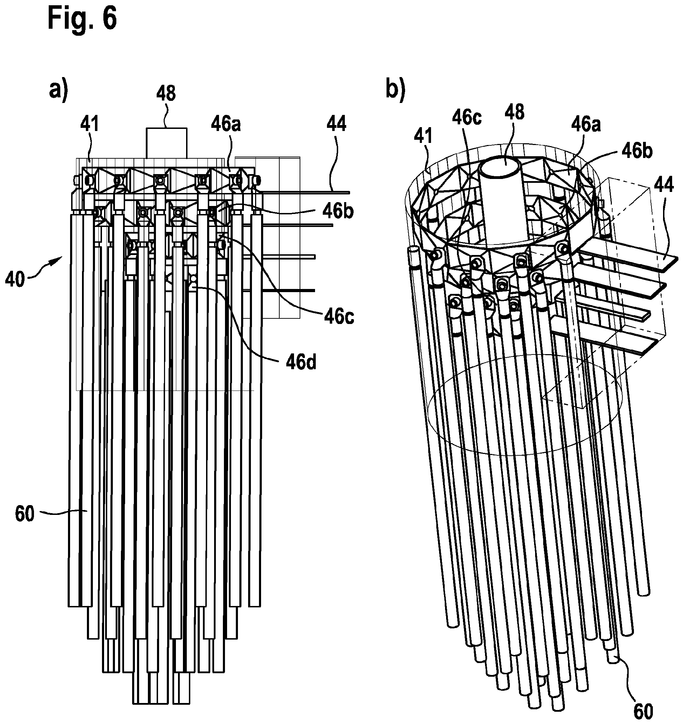

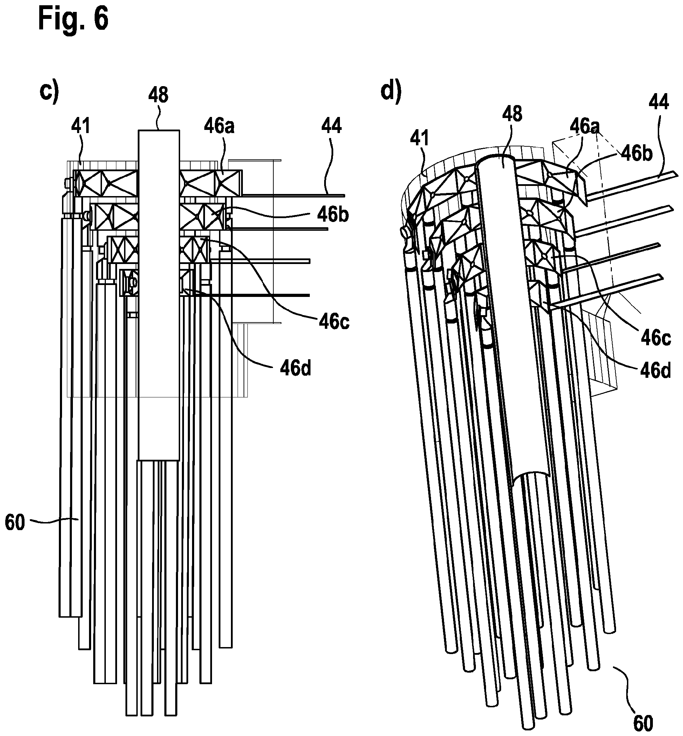

Die Fig. 6 a) bis 6 d) zeigen schematische perspektivische und Schnittdarstellungen eines Anschlusskastens 40 eines erfindungsgemäßen Verkabelungssystems gemäß den vorherigen Figuren, wobei die Figuren 6 a) und 6 b) jeweils perspektivische Volldarstellungen und die Figuren 6 c) und 6 d) jeweils perspektivische Schnittdarstellungen des Anschlusskastens 40 zeigen. Ein Gehäuse 41 ist aus Gründen der Darstellung transparent als Gitternetz gezeigt. Auch die Strukturen in den Anschlussschienen 46a bis 46d sind Artefakte einer Gitternetzdarstellung der an sich idealerweise zylindrischen Anschlussschienen 46a bis 46d.

Die konzentrische Anordnung der Anschlussschienen 46a bis 46d hat den Vorteil, dass bei einer Verdrillung der Kabel 60 des Kabel-Loops 30 sich das gesamte Paket der Kabel 60 um ein gemeinsames Zentrum herum verdrillen kann, welches mit der Azimutachse bzw. zentralen Achse des Turms 4 überein kommt. Dies ermöglicht eine größtmögliche Verdrillung, ohne dass das Kabel-Loop 30 oder die Verbindungen der Kabel 60 des Kabel-Loops 30 mit den Anschlussschienen 46a bis 46d des Anschlusskastens 40 bzw. des Übergangs 32 oder eines unteren Anschlusskastens 42 beschädigt werden. Ebenfalls erlaubt dies die Anordnung eines Durchführungsrohrs 48 für Steuerkabel, Versorgungskabel und Rohre sowie Schläuche etc.

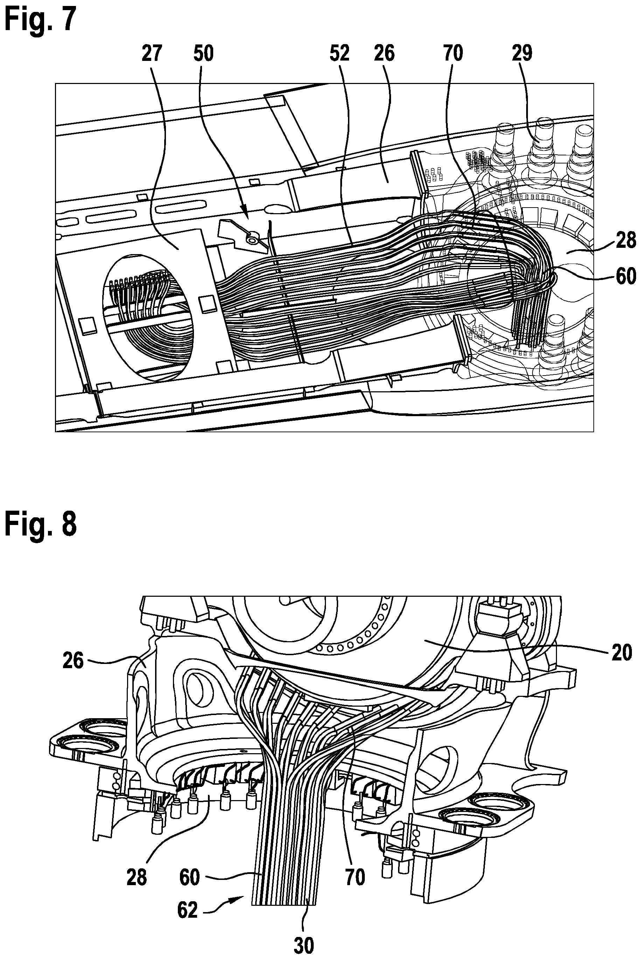

Fig. 7 zeigt eine schematische perspektivische Darstellung einer zweiten Ausführungsform eines erfindungsgemäßen Verkabelungssystems, bei dem anstelle eines Anschlusskastens 40 Muffenverbindungen mit Muffen 70 hergestellt werden. Der Blick geht von oben in den Maschinenträger 26 hinein, wobei aus Darstellungsgründen der Triebstrang 16 und der Generator 24 weggelassen wurden. An der Stelle, an der der Generator 24 auf dem Maschinenträger 26 aufsitzt, ist ein Generatorträger 27 dargestellt, der Teil des Maschinenträgers 26 ist. Die Kabel 52 des gondelseitigen Verkabelungsteilsystems 50 verlaufen auf dem Bett des Maschinenträgers 26 in Richtung zur Azimutöffnung 28 im Hauptteil des Maschinenträgers 26, die von Azimutantrieben bzw. Azimutmotoren 29 flankiert ist. Im Übergangsbereich am Rande der Azimutöffnung 28 sind Muffen 70 zu erkennen, mit denen Verbindungen der gondelseitigen Kabel 52 mit den turmseitigen Kabeln 60 geschützt sind. Da auch in diesem Fall die gondelseitigen Kabel 52 und die turmseitigen Kabel 60 vorinstalliert sind, entfällt die Notwendigkeit, lange Kabel zu konfektionieren und nach der Installation der Gondel 8 auf dem Turm 4 aus der Gondel 8 in den Turm 4 auszurollen und glatthängen zu lassen.

Fig. 8 zeigt eine perspektivische Darstellung eines Details aus Fig. 7, und zwar gesehen in Richtung auf den heckseitigen Teil der Gondel, wobei die gondelseitigen Kabel 50 von dem Getriebe 20 verdeckt sind und unter dem Getriebe 20 bis zu Verbindungen geführt sind, die mit den Muffen 70 geschützt sind. Die turmseitigen Kabel 60 des turmseitigen Verkabelungsteilsystems 62 sind anschließend wiederum konzentrisch um die Turmachse geführt und bilden auf diese Weise das Kabel-Loop 30.

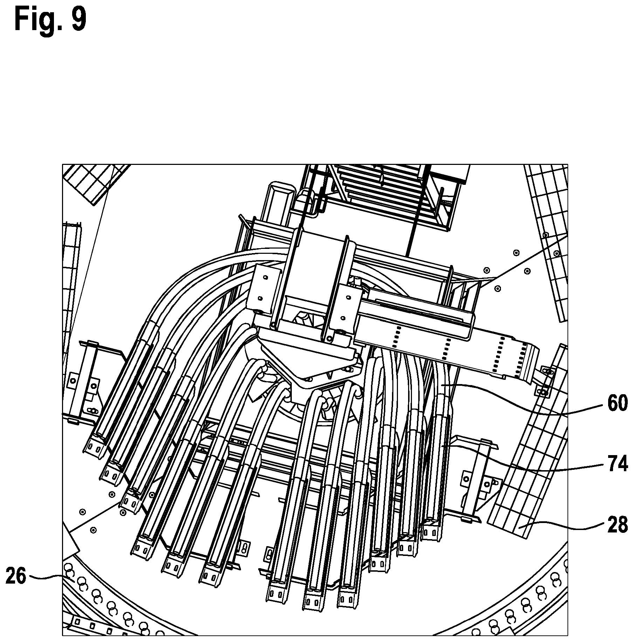

Fig. 9 zeigt eine weitere perspektivische Darstellung eines Details aus Fig. 7 und Fig. 8, wobei in diesem Fall die gondelseitigen Enden der turmseitigen Kabel 60 des Kabel-Loops 30 in der Azimutöffnung 28 des Maschinenträgers 26 gezeigt sind, die allesamt in Richtung auf das Heck der Gondel 8 zu gebogen sind und in Verbindungsmitteln 74 enden, die mit entsprechenden Verbindungsmitteln der nicht dargestellten turmseitigen Kabel zu verbinden und mit Muffen 70 zu schützen sind.

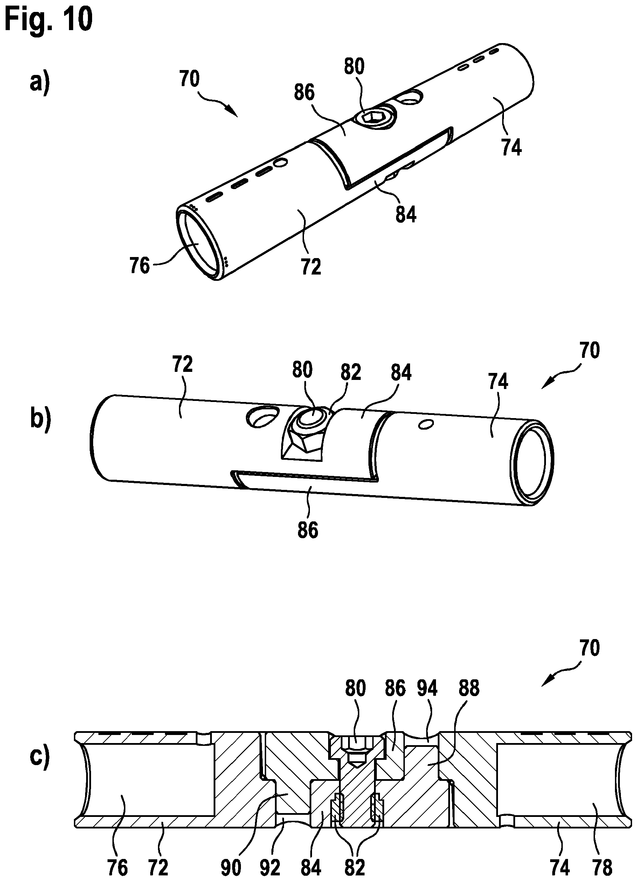

Geeignete galvanische Verbindungsmittel sind in den Fig. 10a) bis 10c) schematisch dargestellt. Es handelt sich um ein Stecksystem mit zwei formkomplementären zylindrischen Verbindungsmitteln 72, 74, die jeweils an ihrem Ende eine Aufnahme 76, 78 für Kabelenden aufweisen, die in diese Aufnahmen 76, 78 eingepresst oder anderweitig befestigt werden. Die Verbindung der Verbindungsmittel 72, 74 wird durch eine Schraube 80 mit einer aufgesetzten und festgezogenen Mutter 82 fixiert. Dazu weisen die beiden Verbindungsmittel 72, 74 jenseits ihrer vollzylindrischen Abschnitte, die die Aufnahmen 76, 78 beherbergen, zueinander formkomplementäre Verbindungsabschnitte 84, 86 auf, die im Wesentlichen als Halbzylinder ausgeführt sind und zur Arretierung jeweils in einem von ihrem vollzylindrischen Abschnitt entfernten distalen Bereich einen Dorn 88, 90 und in einem dem vollzylindrischen Abschnitt benachbarten proximalen Bereich eine Dornaufnahme 92, 94 zur Aufnahme eines komplementären Dorns 88, 90 aufweisen.

Zur Sicherung einer entsprechenden Verbindung ist vorgesehen, die entsprechenden Verbindungsmittel 72, 74 im zusammengesetzten Zustand und mit den eingeführten Kabelenden mit einer Kombination aus Muffen und elektrischen Isolatoren zu schützen, wobei eine oder mehrere Lagen von Schrumpfschläuchen zum Einsatz kommt oder kommen. Entsprechende durch Schrumpfschläuche verbundene und verstärkte Kabelverbindungen sind mechanisch belastbar und halten einen dauerhaften Betrieb auch in einer mechanisch hochbelastenden Umgebung wie in einer Windenergieanlage 2 dauerhaft Stand.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuaszeichenliste

- 2: Windenergieanlage
- 4: Turm
- 6: oberstes Turmsegment
- 8: Gondel
- 10: Rotor
- 12: Rotorblatt
- 14: Rotornabe
- 16: Triebstrang
- 18: langsame Welle
- 20: Getriebe
- 22: schnelle Welle
- 24: Generator
- 26: Maschinenträger
- 27: Generatorträger
- 28: Azimutöffnung zum Turm
- 29: Azimutmotor
- 30: Kabel-Loop
- 32: Übergang
- 34: Drehmomentstütze
- 36: Zugentlastung
- 40: Anschlusskasten
- 41: Gehäuse
- 42: unterer Anschlusskasten
- 44: Anschlussfahnen
- 46a - 46d: Anschlussschienen
- 48: Durchführungsrohr
- 50: gondelseitiges Verkabelungsteilsystem
- 52: gondelseitige Kabel
- 60: turmseitige Kabel
- 62: turmseitiges Verkabelungsteilsystem
- 70: Muffe
- 72, 74: Verbindungsmittel
- 76, 78: Aufnahme für Kabelende
- 80: Schraube
- 82: Mutter
- 84, 86: Verbindungsabschnitt
- 88, 90: Dorn
- 92, 94: Dornaufnahme

## Patentansprüche

1. Verfahren zum Verkabeln einer Windenergieanlage (2), welche nach ihrer Errichtung eine auf einem Turm (4) um eine vertikale Azimutachse rotierbare Gondel (8) mit einem Rotor (10) und einen vom Rotor (10) angetriebenen Generator (24) sowie ein Verkabelungssystem zur Leitung von von dem Generator (24) erzeugtem Strom aus der Gondel (8) in den Fuß des Turms (4) der Windenergieanlage (2) aufweist, wobei das Verkabelungssystem mittels eines im Turm (4) unterhalb der Gondel (8) angeordneten oder anzuordnenden verdrillbaren Kabel-Loops (30) mit einer Mehrzahl von Kabeln (60) eine mehrfache Umdrehung der Gondel (24) um die Azimutachse zulässt, wobei vor dem Errichten der Windenergieanlage (2) ein gondelseitiges Verkabelungsteilsystem (50) in der Gondel (8) eingebaut wird und ein turmseitiges Verkabelungsteilsystem (62), welches das Kabel-Loop (30) umfasst, im Turm (4) oder in einem obersten Turmsegment (6) eingebaut wird, wobei beim Errichten der Windenergieanlage (2) die Gondel (8) mit dem gondelseitigen Verkabelungsteilsystem (50) auf den Turm (4) oder das oberste Turmsegment (6) mit dem turmseitigen Verkabelungsteilsystem (62) aufgesetzt wird und nach dem Aufsetzen das gondelseitige Verkabelungsteilsystem (50) mit dem turmseitigen Verkabelungsteilsystem (62) verbunden wird, wobei zur Verbindung der Verkabelungsteilsysteme (50, 62) miteinander Kabel des Kabel-Loops mittels galvanischer Verbindungsmittel an Kabel des gondelseitigen Verkabelungsteilsystems galvanisch angeschlossen werden, **dadurch gekennzeichnet, dass** die galvanischen Verbindungen mit Muffen (70) versehen werden, wobei die Muffen (70) als Stecksystem mit zwei formkomplementären zylindrischen Verbindungsmitteln ausgebildet sind, die jeweils an ihrem Ende eine Aufnahme für Kabelenden aufweisen.

2. Verfahren nach Anspruch 1, **dadurch gekennzeichnet, dass** zur Verbindung der Verkabelungsteilsysteme (50, 62) miteinander Kabel (60) des Kabel-Loops (30) an Anschlussschienen (46a - 46d) in einem Anschlusskasten (40) des gondelseitigen Verkabelungsteilsystems (50) angeschlossen werden.

3. Verkabelungssystem für eine Windenergieanlage (2), welche nach ihrer Errichtung eine auf einem Turm (4) um eine vertikale Azimutachse rotierbare Gondel (8) mit einem Rotor (10) und einen vom Rotor (10) angetriebenen Generator (24) aufweist, wobei das Verkabelungssystem zur Leitung von von dem Generator (24) erzeugtem Strom aus der Gondel (8) in den Fuß des Turms (4) der Windenergieanlage (2) ausgebildet ist und mittels eines im Turm (4) unterhalb der Gondel (8) angeordneten oder anzuordnenden verdrillbaren Kabel-Loops (30) mit einer Mehrzahl von Kabeln (60) eine mehrfache Umdrehung der Gondel (8) um die Azimutachse zulässt, wobei das Verkabelungssystem ein in der Gondel vorinstalliertes gondelseitiges Verkabelungsteilsystem (50) und ein im Turm (4) oder in einem obersten Turmsegment (6) vorinstalliertes turmseitiges Verkabelungsteilsystem (62) umfasst, welches das Kabel-Loop (30) umfasst, wobei das gondelseitige Verkabelungsteilsystem (50) und das turmseitige Verkabelungsteilsystem (62) nach einem Aufsetzen der Gondel (8) auf den Turm (4) zu dem Verkabelungssystem verbindbar oder verbunden sind, wobei die Kabel (60) des Kabel-Loops (30) an ihren turmseitigen Enden galvanische Verbindungsmittel (72) zur Herstellung galvanischer Verbindungen mit passenden Verbindungsmitteln (74) des gondelseitigen Verkabelungsteilsystems (50) aufweisen, **dadurch gekennzeichnet, dass** die galvanischen Verbindungen mittels Muffen (70) gesichert sind, wobei die Muffen (70) als Stecksystem mit zwei formkomplementären zylindrischen Verbindungsmitteln ausgebildet sind, die jeweils an ihrem Ende eine Aufnahme für Kabelenden aufweisen.

4. Verkabelungssystem nach Anspruch 3, **dadurch gekennzeichnet, dass** das gondelseitige Verkabelungsteilsystem (50) Leitungsschienen und/oder Leitungskabel (52) für eine oder mehrere Phasen sowie Schutzleiter umfasst.

5. Verkabelungssystem nach Anspruch 4, **dadurch gekennzeichnet, dass** das gondelseitige Verkabelungsteilsystem (50) einen Anschlusskasten (40) mit wenigstens drei Anschlussschienen (46a - 46d) aufweist, welche Anschlussstellen zum Anschluss der Kabel (60) des Kabel-Loops (30) aufweisen und mit den Leitungsschienen und/oder Leitungskabeln (52) des gondelseitigen Verkabelungsteilsystems (50) verbunden sind, wobei insbesondere das turmseitige Verkabelungsteilsystem (62) zusätzlich einen unteren Anschlusskasten (42) mit wenigstens drei Anschlussschienen zum Anschluss von unteren Enden der Kabel (60) des Kabel-Loops (30) aufweist.

6. Verkabelungssystem nach Anspruch 5, **dadurch gekennzeichnet, dass** der Anschlusskasten (40) und/oder der untere Anschlusskasten (42) eine zylindrische Form aufweist, wobei die Anschlussschienen (46a - 46d) als konzentrische kreisförmige Anschlussschienen (46a - 46d) ausgebildet sind.

7. Verkabelungssystem nach Anspruch 6, **dadurch gekennzeichnet, dass** die Anschlussschienen (46a - 46d) im Anschlusskasten (40) und/oder im unteren Anschlusskasten (42) in vertikaler Richtung gestaffelt angeordnet sind.

8. Verkabelungssystem nach Anspruch 6 oder 7, **dadurch gekennzeichnet, dass** der Anschlusskasten (40) in seinem Zentrum eine Durchführung (48) für Kabel, insbesondere Steuerkabel und/oder Versorgungskabel, und/oder für Schläuche aufweist.

9. Verkabelungssystem nach einem der Ansprüche 3 bis 8, **dadurch gekennzeichnet, dass** wenigstens eine Zugentlastung (36) und/oder Drehmomentstütze (34) an einem oberen Ende des Kabel-Loops (30) und/oder wenigstens eine Zugentlastung (36) und/oder Drehmomentstütze (34) an einem unteren Ende des Kabel-Loops (30) umfasst ist oder sind.

10. Windenergieanlage (2) mit einem Verkabelungssystem nach einem der Ansprüche 3 bis 9.

## Claims

1. A method of wiring a wind energy installation (2) which, after it has been erected, comprises a nacelle (8) which can rotate on a tower (4) about a vertical azimuth axis and which has a rotor (10) and a generator (24) which is driven by the rotor (10), as well as a cabling system for conducting electricity generated by the generator (24) from the nacelle (8) into the base of the tower (4) of the wind energy installation (2), wherein the cabling system permits multiple rotation of the nacelle (24) about the azimuth axis by means of a cable loop (30) which can be twisted and which comprises a plurality of cables (60) and which is arranged or is to be arranged in the tower (4) below the nacelle (8), wherein, before the wind energy installation (2) is erected, a nacelle-side cabling subsystem (50) is installed in the nacelle (8) and a tower-side cabling subsystem (62), which comprises the cable loop (30), is installed in the tower (4) or in an uppermost tower segment (6) wherein, during the course of the erection of the wind energy installation (2), the nacelle (8), together with the nacelle-side cabling subsystem (50), is placed on the tower (4) or on the uppermost tower segment (6) with the tower-side cabling subsystem (62) and, after this has been placed, the nacelle-side cabling subsystem (50) is connected to the tower-side cabling subsystem (62), wherein, in order to connect the cabling subsystems (50, 62) to one another, cables of the cable loop are galvanically connected by means of galvanic connection means to cables of the nacelle-side cabling subsystem, **characterised in that** the galvanic connections are provided with sleeves (70), wherein the sleeves (70) are constructed as a plug-in system with two cylindrical connection means which are of a complementary shape and which each have, at their ends, a receptacle for cable ends.

2. The method according to claim 1, **characterised in that**, for connecting the cabling subsystems (50, 62) to one another, cables (60) of the cable loop (30) are connected to connection rails (46a - 46d) in a junction box (40) of the nacelle-side cabling subsystem (50).

3. A cabling system for a wind energy installation (2) which, after it has been erected, comprises a nacelle (8) which can rotate on a tower (4) about a vertical azimuth axis and which has a rotor (10) and a generator (24) which is driven by the rotor (10), wherein the cabling system is constructed for conducting electricity generated by the generator (24) from the nacelle (8) into the base of the tower (4) of the wind energy installation (2), and wherein the cabling system permits multiple rotation of the nacelle (8) about the azimuth axis by means of a cable loop (30) which can be twisted and which comprises a plurality of cables (60) and which is arranged or is to be arranged in the tower (4) below the nacelle (8), wherein the cabling system comprises a nacelle-side cabling subsystem (50) which is pre-installed in the nacelle, and a tower-side cabling subsystem (62) which is pre-installed in the tower (4) or in an uppermost tower segment (6), which comprises the cable loop (30), wherein the nacelle-side cabling subsystem (50) and the tower-side cabling subsystem (62) can be, or are, connected so as to form the cabling system after the nacelle (8) has been placed on the tower (4), wherein the cables (60) of the cable loop (30) comprise, at their tower-side ends, galvanic connection means (72) for forming galvanic connections with matching connection means (74) of the nacelle-side cabling subsystem (50), **characterised in that** the galvanic connections are secured by means of sleeves (70), wherein the sleeves (70) are constructed as a plug-in system with two cylindrical connection means which are of a complementary shape and which each have, at their ends, a receptacle for cable ends.

4. The cabling system according to claim 3, **characterised in that** the nacelle-side cabling subsystem (50) comprises conductive rails and/or conductive cables (52) for one or more phases, as well as protective earth conductors.

5. The cabling system according to claim 4, **characterised in that** the nacelle-side cabling subsystem (50) comprises a junction box (40) with at least three connection rails (46a - 46d), which have connection points for connecting the cables (60) of the cable loop (30) and which are connected to the conductive rails and / or the conductive cables (52) of the nacelle-side cabling subsystem (50), in particular wherein the tower-side cabling subsystem (62) additionally has a lower junction box (42) with at least three connection rails for connecting lower ends of the cables (60) of the cable loop (30).

6. The cabling system according to claim 5, **characterised in that** the junction box (40) and/or the lower junction box (42) has a cylindrical shape, wherein the connection rails (46a - 46d) are constructed as connection rails (46a - 46d) which are concentric and which are of a circular shape.

7. The cabling system according to claim 6, **characterised in that** the connection rails (46a - 46d) are arranged in the junction box (40) and/or in the lower junction box (42) in such a way that they are staggered in the vertical direction.

8. The cabling system according to claim 6 or 7, **characterised in that** the junction box (40) has, in its centre, a passageway (48) for cables, in particular control cables and/ or supply cables, and/or for hoses.

9. The cabling system according to any one of the claims 3 to 8, **characterised in that** at least one strain relief (36) and/or torque arm (34) is or are included at an upper end of the cable loop (30) and/or at least one strain relief (36) and/or torque arm (34) is or are included at a lower end of the cable loop (30).

10. A wind energy installation (2) with a cabling system according to any one of the claims 3 to 9.

## Revendications

1. Procédé de câblage d'une éolienne (2), laquelle présente après sa construction une nacelle (8) rotative autour d'un axe d'azimut vertical sur une tour (4) avec un rotor (10) et un générateur (24) entraîné par le rotor (10) ainsi qu'un système de câblage pour la conduite de courant généré par le générateur (24) de la nacelle (8) au pied de la tour (4) de l'éolienne (2), dans lequel le système de câblage autorise de multiples tours de la nacelle (24) autour de l'axe d'azimut au moyen d'une boucle de câble (30) torsadable à agencer ou agencée en-dessous de la nacelle (8) dans la tour (4) avec une pluralité de câbles (60), dans lequel avant la construction de l'éolienne (2) un système partiel de câblage côté nacelle (50) est monté dans la nacelle (8) et un système partiel de câblage côté tour (62), lequel comprend la boucle de câble (30), est monté dans la tour (4) ou dans un segment de tour le plus haut (6), dans lequel lors de la construction de l'éolienne (2) la nacelle (8) est posée avec le système partiel de câblage côté nacelle (50) sur la tour (4) ou le segment de tour le plus haut (6) est posé avec le système partiel de câblage côté tour (62) et après la pose le système partiel de câblage côté nacelle (50) est relié au système partiel de câblage côté tour (62), dans lequel pour la liaison des systèmes partiels de câblage (50, 62) l'un à l'autre des câbles de la boucle de câble sont raccordés galvaniquement au moyen de moyens de liaison galvaniques à des câbles du système partiel de câblage côté nacelle, **caractérisé en ce que** les liaisons galvaniques sont dotées de manchons (70), dans lequel les manchons (70) sont réalisés en tant que système enfichable avec deux moyens de liaison cylindriques de forme complémentaire, qui présentent respectivement à leur extrémité un logement pour extrémités de câble.

2. Procédé selon la revendication 1, **caractérisé en ce que** pour la liaison des systèmes partiels de câblage (50, 62) l'un à l'autre des câbles (60) de la boucle de câble (30) sont raccordés à des rails de raccordement (46a - 46d) dans un boîtier de raccordement (40) du système partiel de câblage côté nacelle (50).

3. Système de câblage pour une éolienne (2), laquelle présente après sa construction une nacelle (8) rotative autour d'un axe d'azimut vertical sur une tour (4) avec un rotor (10) et un générateur (24) entraîné par le rotor (10), dans lequel le système de câblage est réalisé pour la conduite de courant généré par le générateur (24) de la nacelle (8) au pied de la tour (4) de l'éolienne (2) et autorise de multiples tours de la nacelle (8) autour de l'axe d'azimut au moyen d'une boucle de câble (30) torsadable à agencer ou agencée en-dessous de la nacelle (8) dans la tour (4) avec une pluralité de câbles (60), dans lequel le système de câblage comprend un système partiel de câblage côté nacelle (50) préinstallé dans la nacelle et un système partiel de câblage côté tour (62) préinstallé dans la tour (4) ou dans un segment de tour le plus haut (6), lequel comprend la boucle de câble (30), dans lequel le système partiel de câblage côté nacelle (50) et le système partiel de câblage côté tour (62) après une pose de la nacelle (8) sur la tour (4) peuvent être reliés ou sont reliés pour former le système de câblage, dans lequel les câbles (60) de la boucle de câble (30) présentent à leurs extrémités côté tour des moyens de liaison (72) galvaniques pour l'établissement de liaisons galvaniques avec des moyens de liaison (74) adaptés du système partiel de câblage côté nacelle (50), **caractérisé en ce que** les liaisons galvaniques sont bloquées au moyen de manchons (70), dans lequel les manchons (70) sont réalisés en tant que système enfichable avec deux moyens de liaison cylindriques de forme complémentaire, qui présentent respectivement à leur extrémité un logement pour extrémités de câble.

4. Système de câblage selon la revendication 3, **caractérisé en ce que** le système partiel de câblage côté nacelle (50) comprend des rails de conduite et/ou câbles de conduite (52) pour une ou plusieurs phases ainsi que des conducteurs de protection.

5. Système de câblage selon la revendication 4, **caractérisé en ce que** le système partiel de câblage côté nacelle (50) présente un boîtier de raccordement (40) avec au moins trois rails de raccordement (46a - 46d), lesquels présentent des points de raccordement pour le raccordement des câbles (60) de la boucle de câble (30) et sont reliés aux rails de conduite et/ou câbles de conduite (52) du système partiel de câblage côté nacelle (50), dans lequel en particulier le système partiel de câblage côté tour (62) présente en plus un boîtier de raccordement inférieur (42) avec au moins trois rails de raccordement pour le raccordement d'extrémités inférieures des câbles (60) de la boucle de câble (30).

6. Système de câblage selon la revendication 5, **caractérisé en ce que** le boîtier de raccordement (40) et/ou le boîtier de raccordement inférieur (42) présente une forme cylindrique, dans lequel les rails de raccordement (46a - 46d) sont réalisés en tant que rails de raccordement (46a - 46d) circulaires concentriques.

7. Système de câblage selon la revendication 6, **caractérisé en ce que** les rails de raccordement (46a - 46d) dans le boîtier de raccordement (40) et/ou dans le boîtier de raccordement inférieur (42) sont agencés de manière échelonnée dans la direction verticale.

8. Système de câblage selon la revendication 6 ou 7, **caractérisé en ce que** le boîtier de raccordement (40) présente en son centre un passage (48) pour câble, en particulier câble de commande et/ou câble d'alimentation, et/ou pour tuyaux.

9. Système de câblage selon l'une quelconque des revendications 3 à 8, **caractérisé en ce qu'**au moins une décharge de traction (36) et/ou support de couple (34) est ou sont compris au niveau d'une extrémité supérieure de la boucle de câble (30) et/ou au moins une décharge de traction (36) et/ou support de couple (34) est ou sont compris au niveau d'une extrémité inférieure de la boucle de câble (30).

10. Éolienne (2) avec un système de câblage selon l'une quelconque des revendications 3 à 9.
